# EUROPEAN PATENT APPLICATION

(11) **EP 1 257 032 A1**
(43) Date of publication of application: **13.11.2002**
(21) Application number: 02076855.2
(22) Date of filing: 10.05.2002
(51) Int. Cl.: H02G 3/32

(54) **Hanging support for cable channel**

(30) Priority: 11.05.2001 NL 1018051
(71) Applicant: Gouda Holland B.V., 2851 AW Haastrecht (NL)
(72) Inventor: Boer, Dirk René, 2851 VS Haastrecht (NL)
(74) Representative: 't Jong, Bastiaan Jacobus

(57) **Abstract**

The invention relates to a cable channel device comprising a cable channel, a support mountable on a fixed object, and a coupling device provided with at least one cable channel engaging means engaging on the cable channel and at least one support engaging means engaging on the support, characterized in that at least one of the engaging means is a rapidly coupling engaging means.

## Description

The invention relates to a cable channel device comprising a cable channel, a support mountable on a fixed object, and a coupling device provided with at least one cable channel engaging means engaging on the cable channel and at least one support engaging means engaging on the support.

Such cable channel devices are generally known.

Installing such a cable channel device is laborious. Mounting the coupling device and connection thereof to the cable channel is time-consuming.

The invention has for its object to provide a cable channel device of the type specified in the preamble wherein this drawback is alleviated.

This object is achieved in a cable channel device according to the invention in that at least one of the engaging means is a rapidly coupling engaging means. The engaging means can hereby be coupled rapidly to the cable channel and/or the support, whereby a rapid installation of the cable channel device according to the invention is possible.

The support engaging means preferably comprises at least two positions, a first position wherein the element for engaging can be received and a second position wherein it can be engaged fixedly. For coupling of the support engaging means it is simply moved from the first position to the second position.

A further development of the cable channel device according to the invention makes use of a support in the form of a support pin. According to the invention the rapidly coupling engaging means is herein a rod clip, at least partly of resilient material, which comprises at least one protruding wing and at least one support pin opening, wherein the support pin can be received in and gripped fixedly in the support pin opening. The support pin can be rapidly inserted into the rod clip and clamped therein.

The rod clip can herein preferably engage height-adjustably on the support pin.

The mounting of the cable channel device according to the invention can be carried out even more quickly when the rod clip can be connected to the cable channel by a rapid coupling.

In a suitable embodiment of the device according to the invention the rapid coupling is a protrusion which can be inserted into a bore of the cable channel and can be fixed therein by a partial turn. The rod clip can be arranged on the cable channel in simple manner by inserting the protrusion into the bore of the cable channel and rotating the rod clip through a turn, for instance a quarter-turn. A considerable time-saving is achieved compared to the usual fitting using nut and bolt.

It is noted that the use of rod clips is per se known, for instance for application in the suspension of lowered ceiling constructions.

The invention is further elucidated in the following description on the basis of the annexed figures of a number of embodiments.

Figure 1 is a perspective view of a cable channel device according to an embodiment of the invention.

Figure 2a shows a detail of figure 1 during a first stage of the arranging of a rod clip.

Figure 2b shows a view corresponding with figure 2a of the second stage of the arranging of a rod clip.

Figure 3 shows the mounting of the cable channel on a support pin.

Figures 4a and 4b respectively show views corresponding with figures 2a and 2b of an alternative embodiment.

Figure 5 shows a third embodiment of the rod clip with support pin and cable channel.

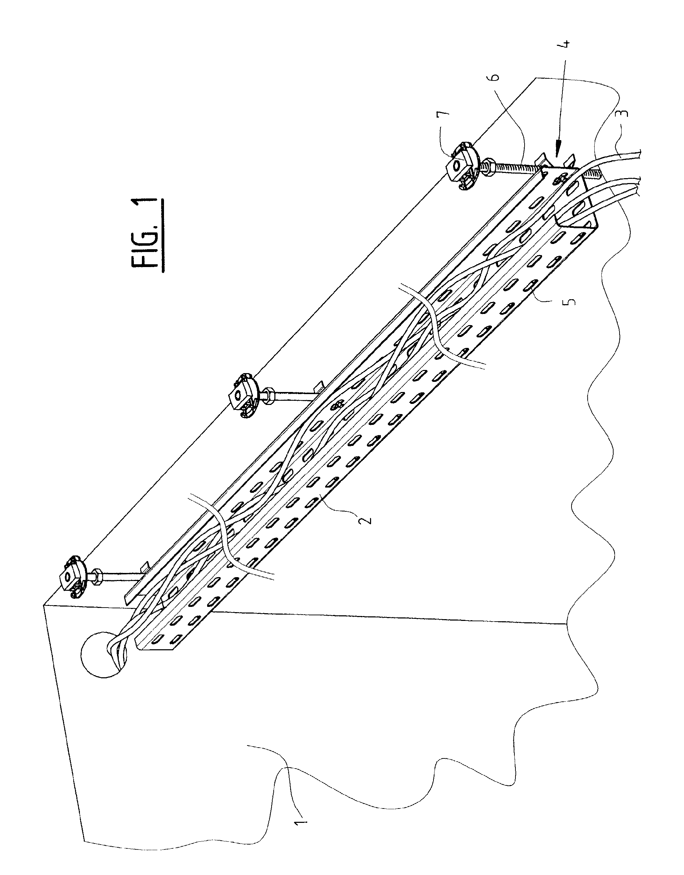

Figure 1 shows a cable channel suspended by means of rod clips and support pins. Support pins 6 are fixed protrudingly to a frame 1 using fastening means 7. Fastening means 7 are fixedly connected to frame 1. Support pin 6 protrudes downward. The support pin is provided with a surface structure with relief. Owing to the relief, in this case screw thread, the grip on the pin is increased. In another embodiment the support pin can also be smooth. Cable channel 2 according to this first embodiment is provided with longitudinal bores 5 and carries for instance cables 3. Coupling device 4 couples the cable channel 2 to the support, in this case support pin 6. In this preferred embodiment the coupling device is a rod clip.

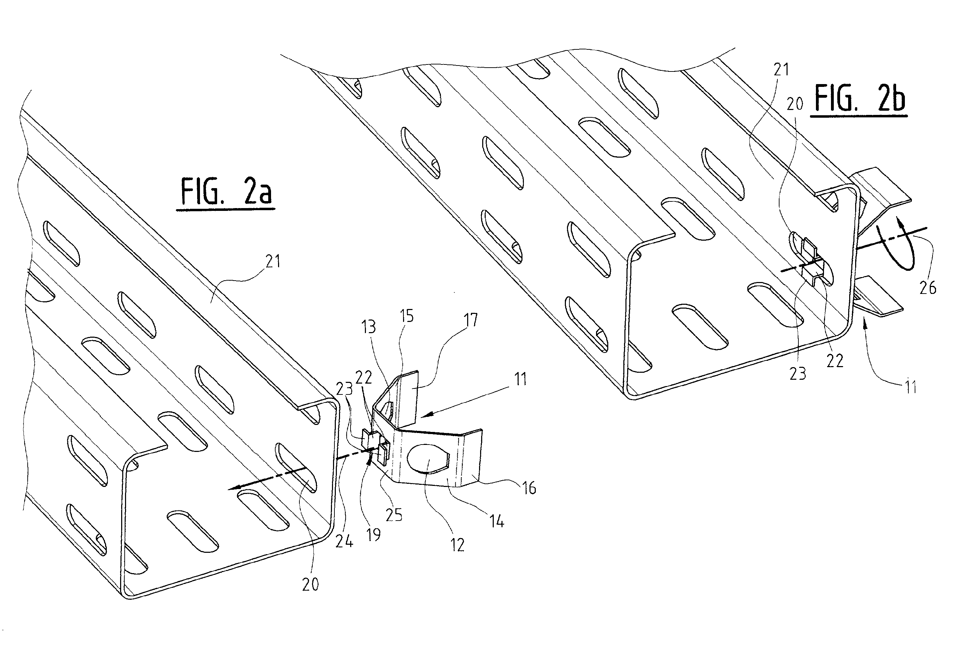

In figure 2a and 2b the rod clip of the first embodiment is shown in detail. Figure 2a shows rod clip 11 and cable channel 21. The support device, in particular the support pin, is not shown. Cable channel 21 is provided with a number of longitudinal bores 20. Longitudinal bores 20 are arranged in surfaces constructing the cable channel 21 and form bores which are elongate in the longitudinal direction of cable channel 21.

Rod clip 11 is at least partly made up of resilient material and in this first embodiment comprises two protruding wings 14, 15 and two additionally protruding wings 16 and 17. Rod clip 11 also comprises cable channel engaging means 19, which in this embodiment are assembled from two legs 22 which each have a hook 23 and which protrude from rod clip 11. Wings 14 and 15 are provided with respective support pin openings 12 and 13. Support pin openings 12 and 13 preferably have the oval flat-end shape as shown in figure 2a. This shape is efficient for receiving the support pin (not shown) which can be received by these openings. Support pin openings 12 and 13 are placed such that a support pin can be arranged through these openings. The support pin runs parallel to the central part 25 of rod clip 11. In this embodiment the support pin preferably has a round cross-section. The additional wings 16 and 17 are arranged in order to enable efficient exertion of pressure on the protruding wings 14 and 15.

Leg 22 and hook 23 of rapidly coupling cable channel engaging means 19 can be arranged as according to arrow 24 in a longitudinal bore 20 of cable channel 21. In figure 2b the rod clip 11 is coupled to cable channel 21. Hook 23 and leg 22 protrude through longitudinal bore 20 and, after rotation according to arrow 26, hook behind the peripheral edge of longitudinal bore 20 on the inside of cable channel 21. Rod clip 11 is thus mounted in fixed manner on cable channel 21. Fastening of rod clip 11 to cable channel 21 requires only insertion and rotation of the rod clip. This is a very quick and efficient method of fastening.

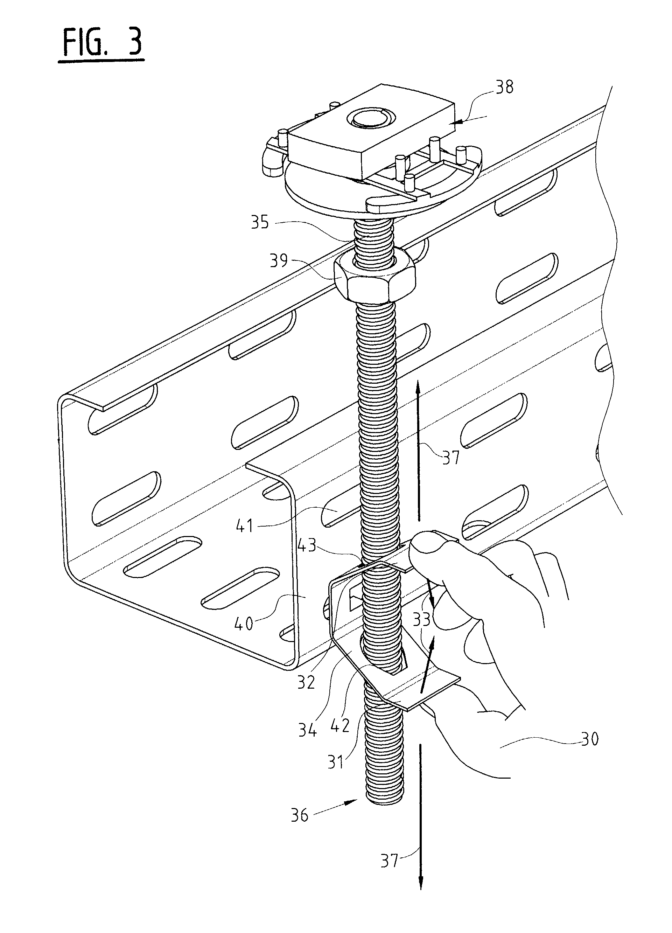

Figure 3 shows rod clip 34 fastened to cable channel 40 in a longitudinal bore 41. Also shown is support pin 36 which is provided with a threaded surface structure 35 and a bolt 39. Arranged on an end of support pin 36 are fixing means 38 which can be mounted on a frame (not shown). When force is exerted in the direction of arrows 33 using the fingertips of hand 30, i.e. the additional wings 31 and 32 are pinched together, it then becomes possible to arrange support pin 36 in openings 42 and 43. When the pressure according to arrows 33 is sustained, support pin 36 can move up and down as according to arrows 37. When support pin 36 is fixedly connected to a frame, it is cable channel 40 and rod clip 34 which are of course moved up and down.

When the pressure according to arrows 33 is reduced the resilient material which the rod clip 34 at least partly comprises will ensure that support pin openings 42 and 43 engage on support pin 36. When pressure 33 is applied support pin 36 is once again released from the clamping engagement and can again be moved as according to arrows 37.

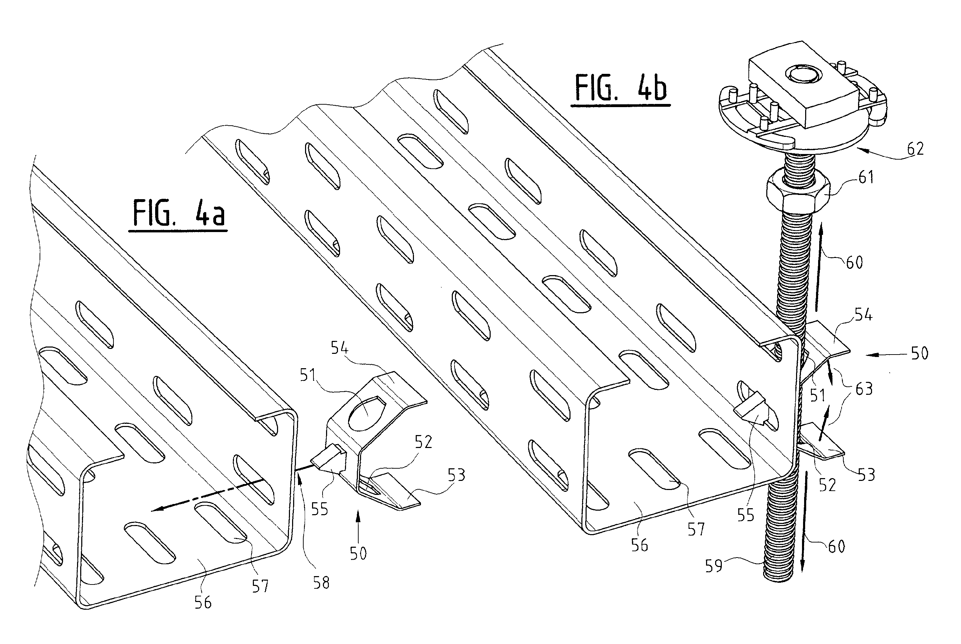

Figure 4a shows cable channel 56 with longitudinal bores 57 and rod clip 50 according to a second embodiment. The rod clip comprises two openings 51 and 52 and additionally protruding wings 53 and 54. According to this embodiment the cable channel engaging means 55 is a "tree"-shaped engaging means made from for instance solid rubber. When the rod clip is moved in the direction of arrow 58, engaging means 55 can be arranged in longitudinal bore 57 without rotation, as shown in figure 4b. Support pin 59 can be arranged in support pin openings 51 and 52, wherein the support pin is provided with bolt 61 and fixing means 62 for the connection to a frame. When pressure is applied as according to arrow 63 the rod clip is bent slightly, whereby support pin 59 can be arranged in openings 51 and 52 as according to arrows 60. When the pressure according to arrows 63 is removed, support pin openings 51 and 52 engage on the outer surface of support pin 59, whereby the support pin is held in clamping manner. In this manner the unit of cable channel 56 and rod clip 50 is suspended from support pin 59.

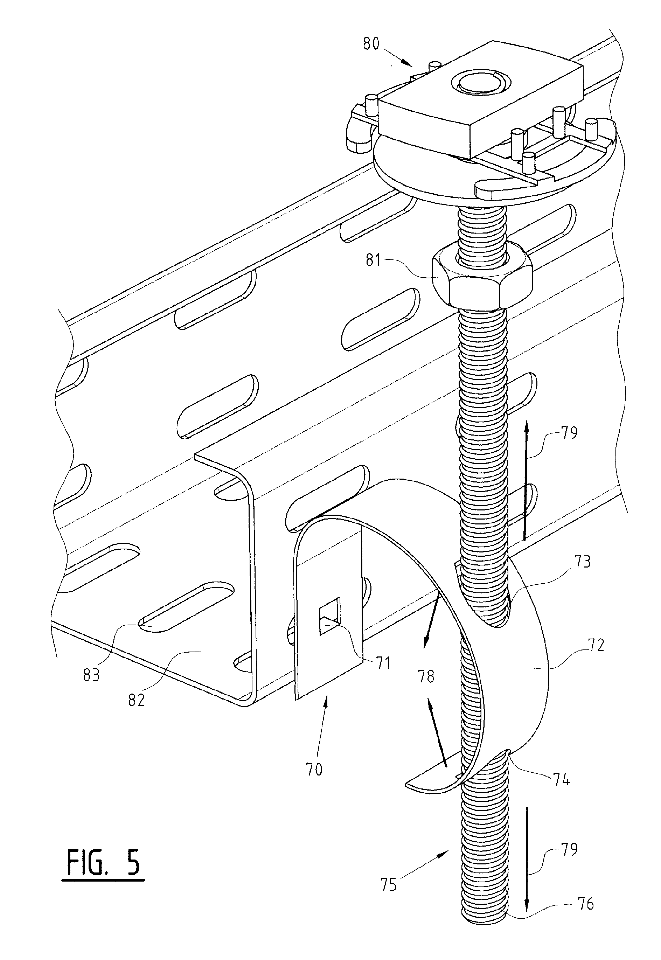

Figure 5 shows a rod clip 70 in a third embodiment. Rod clip 70 comprises only one protruding wing 72 provided with two support pin openings 73 and 74. Rod clip 70 further comprises cable channel engaging means 71, which can be fixed into a longitudinal bore 83 of cable channel 82. Support pin openings 73 and 74 are made for the purpose of receiving a support pin 75. Pressure can be exerted for this purpose according to arrows 78 on rod clip 70. Support pin 75 comprises a relief surface structure 76, for instance screw thread. A nut 81 and fixing means 80 serve for a connection to a fixed frame.

## Claims

1. Cable channel device comprising a cable channel, a support mountable on a fixed object, and a coupling device provided with at least one cable channel engaging means engaging on the cable channel and at least one support engaging means engaging on the support, **characterized in that** at least one of the engaging means is a rapidly coupling engaging means.

2. Cable channel device as claimed in claim 1, **characterized in that** the rapidly coupling engaging means comprises at least two positions, a first position wherein the element for engaging can be received and a second position wherein it can be engaged fixedly.

3. Cable channel device as claimed in claim 1 or 2, wherein the support comprises a support pin, **characterized in that** the rapidly coupling engaging means comprises a rod clip, at least partly of resilient material, which comprises at least one protruding wing and at least one support pin opening, wherein the support pin can be received in and gripped fixedly in the support pin opening.

4. Cable channel device as claimed in claim 3, **characterized in that** the rod clip can engage height-adjustably on the support pin.

5. Cable channel device as claimed in claim 3 or 4, **characterized in that** the rod clip can be connected to the cable channel by a rapid coupling.

6. Cable channel device as claimed in claim 5, **characterized in that** the rapid coupling comprises a protrusion which can be inserted into a bore of the cable channel and can be fixed therein by a partial rotation of the rod clip.

7. Rod clip evidently intended for a cable channel device as claimed in one or more of the foregoing claims.
